# FASCICULE DE BREVET EUROPEEN

(11) **EP 2 406 099 B1**
(45) Date de publication et mention de la délivrance du brevet: **02.09.2015**
(21) Numéro de dépôt: 10710872.2
(22) Date de dépôt: 09.03.2010
(51) Int. Cl.: B60L 11/18, B60L 5/42, B60M 1/36, B60L 5/36, B60M 1/08

(54) **ENSEMBLE AÉRIEN POUR LA FOURNITURE D'ÉNERGIE ÉLECTRIQUE À UN VÉHICULE TERRESTRE ÉQUIPÉ D'UNE STRUCTURE SUPÉRIEURE DE CAPTAGE.**
OBERANORDNUNG ZUR ZUFÜHRUNG VON ELEKTRISCHER ENERGIE ZU EINEM MIT EINER OBEREN AUFNAHMESTRUKTUR VERSEHENEN BODENFAHRZEUG
AERIAL ASSEMBLY FOR SUPPLYING ELECTRICAL POWER TO A GROUND VEHICLE PROVIDED WITH AN UPPER COLLECTING STRUCTURE

(30) Priorité: 09.03.2009 FR 0901055
(43) Date de publication de la demande: 18.01.2012
(73) Titulaire: NewTL, 67120 Ernolsheim sur Bruche (FR)
(72) Inventeur: ANDRE, Jean-Luc, F-67120 Molsheim (FR)
(74) Mandataire: Merckling, Norbert
(86) Numéro de dépôt international: PCT/FR2010/000195
(87) Numéro de publication internationale: WO 2010/103202

(56) Documents cités:
- WO-A-01/72547
- FR-A- 2 910 391
- GB-A- 2 256 178

## Description

La présente invention se rapporte à un ensemble aérien articulé comprenant une ou plusieurs pièces polaires faisant office de frotteurs pour la fourniture d'énergie électrique à un véhicule terrestre électrique à structure supérieure de toit réceptrice de l'énergie électrique.

Il s'agit dans un mode particulier de réalisation d'un bras d'alimentation électrique monté pivotant sur un poteau, un mât, une façade ou un support fixe quelconque.

La présente invention est destinée à servir d'ensemble d'alimentation aérienne en énergie électrique d'un véhicule terrestre électrique équipé d'une structure supérieure de toit pour le captage de l'énergie électrique.

Le véhicule passe sous l'ensemble aérien de fourniture d'énergie électrique et c'est par le contact glissant d'au moins une des pièces polaires faisant office de frotteur(s) avec la partie supérieure linéaire conductrice de la structure de toit que l'énergie électrique est apportée au véhicule pour son déplacement après un éventuel stockage.

Ces moyens fonctionnent également à l'arrêt du véhicule. Il suffit que la ou les pièce(s) polaire(s) soi(en)t en contact dans ce cas dormant avec la structure supérieure de toit du véhicule captant l'énergie pour que le transfert d'énergie ait lieu.

Le présent déposant et ses inventeurs ont développé un nouveau système d'alimentation électrique pour véhicule électrique dans lequel le véhicule est dépourvu de pantographe ou de tout système de captage analogue présentant une structure complexe et un encombrement important sur le toit.

Selon ce système original, le véhicule présente une structure supérieure de toit comportant au moins un élément de captage s'étendant sensiblement sur toute la longueur du véhicule. Des moyens d'alimentation électrique sont prévus de façon localisée le long de la voie sur laquelle circule le véhicule. Ces moyens d'alimentation électrique comportent chacun un ou plusieurs frotteurs d'alimentation électrique qui entre(nt) en contact glissant ou dormant avec la structure supérieure de toit du véhicule afin de lui fournir l'énergie électrique dont il a besoin pour son déplacement et son fonctionnement.

Sur ce tronçon de voie, l'espacement entre chaque moyen d'alimentation du système est prévu de manière que la structure de toit du véhicule assurant le captage de l'énergie électrique soit en permanence en contact avec au moins un frotteur d'alimentation électrique. Dans le cas d'un véhicule terrestre à stockage d'énergie, l'intervalle peut être plus important.

Ces moyens d'alimentation fonctionnent également à l'arrêt du véhicule. Cependant, il faut que la ou les pièce(s) polaire(s) soi(en)t en contact avec la structure supérieure de captage du véhicule pour que le transfert d'énergie ait lieu.

Les moyens d'alimentation électrique peuvent être portés par des poteaux, par des réverbères, par des câbles tendus et en général par tout moyen permettant de les placer et de les fixer en hauteur. De même, ces moyens d'alimentation électrique sont généralement portés par un ensemble qui permet de suspendre les frotteurs en porte-à-faux au-dessus de l'espace de passage du véhicule électrique.

Il est connu que les moyens aériens d'alimentation électrique, tels que les caténaires et les câbles haute-tension constituent en général un danger en milieu urbain. En effet, toute personne entrant en contact avec un des éléments sous tension de ces moyens d'alimentation électrique risque un grave accident pouvant causer la mort.

De plus, cette ligne aérienne peut devenir une gêne pour l'intervention des pompiers ou pour toute autre intervention nécessitant des moyens de levage ou d'accès à un niveau supérieur.

La sécurité réclame des moyens de protection empêchant l'accès aux contacts électriques ou coupant la tension électrique en dehors des phases de captage, de manière à éviter tout risque d'accident.

Le document GB 2256178 discloses an ensemble aérien selon le préambule de la revendication 1.

Le but de l'invention est d'apporter à un véhicule un moyen aérien original de fourniture d'énergie électrique tout en garantissant une sécurité électrique totale en dehors des phases de captage.

En outre, dans le cas où le véhicule électrique est un véhicule routier ou urbain, la présence d'ensembles en hauteur sur la voie ou sur la chaussée peut constituer un obstacle pour des véhicules plus hauts ou autres. Il serait avantageux que ces ensembles soient prévus effaçables pour dégager l'espace nécessaire au passage de mobiles plus hauts.

Selon l'invention, on prévoit un ensemble aérien d'alimentation électrique mobile ou déformable comprenant un ou plusieurs frotteurs mis automatiquement hors tension lorsque l'ensemble d'alimentation électrique est en position de repos et mis sous tension c'est-à-dire en état d'alimenter en énergie électrique lorsque l'ensemble ou une partie de celui-ci se trouve en position d'alimentation, à savoir lorsque le véhicule vient en dessous de l'ensemble d'alimentation. Pour passer en position d'alimentation, il est par exemple soulevé mécaniquement et automatiquement par la rampe montante de début de la structure supérieure de toit du véhicule.

Pour résoudre ce problème technique l'invention fournit un ensemble aérien d'alimentation électrique, à disposer à proximité d'une voie de circulation ou d'arrêt d'un véhicule terrestre, qui est destiné à fournir temporairement de l'énergie électrique à ce véhicule terrestre au passage ou à l'arrêt de celui-ci. Cet ensemble est monté sur une base fixe, telle qu'un poteau, un montant, une façade ou autre. Il comprend une ou plusieurs pièces polaires de contact électrique par frottement dormant ou glissant destinées à venir en contact de fourniture d'énergie électrique avec au moins un élément de captage électrique d'une structure de captage portée par la partie supérieure du véhicule terrestre.

Selon l'invention, cet ensemble d'alimentation comprend les moyens inclus dans la revendication 1.

Selon les variantes, la partie mobile ou déformable de l'ensemble d'alimentation peut basculer ou provoquer un basculement autour d'un axe sensiblement parallèle ou perpendiculaire à la voie.

Cette partie mobile ou déformable est préférentiellement constituée d'une tête portant le ou les frotteur(s) prolongée par une liaison rigide ou déformable jusqu'à la jonction avec la base fixe.

La partie mobile ou déformable peut être du type à effet élastique à rappel vers le bas et peut par exemple comprendre un ressort à lame.

Selon un mode de réalisation préférentiel, la liaison entre la partie mobile ou déformable et la partie fixe comprend une articulation, qui forme de préférence un moyen de pivotement pour le déplacement de la partie mobile ou déformable de l'ensemble d'alimentation électrique provoquant un mouvement de basculement vertical autour d'un axe sensiblement parallèle à la voie.

De préférence, l'ensemble de raccordement électrique d'alimentation automatique comprend des bornes d'alimentation électrique logées dans la partie mobile ou déformable de l'ensemble d'alimentation. Cet ensemble de raccordement électrique peut également comprendre un moyen de mise sous tension et de coupure en fonction de la présence ou de l'absence du véhicule en regard de l'ensemble d'alimentation électrique ou à proximité de celui-ci.

Selon un mode de réalisation de l'invention, l'ensemble de fourniture d'énergie électrique selon l'invention est un bras mobile ou déformable comportant une partie mobile ou déformable amenée ou contrainte en position d'alimentation par un moyen extérieur ou par la rampe frontale de la structure supérieure de toit du véhicule comprenant le moyen de captage électrique lorsque la partie avant de ce dernier passe sous le bras d'alimentation électrique. Selon une variante, ce mouvement met automatiquement sous tension électrique le ou les frotteurs du moyen d'alimentation afin de transférer l'énergie électrique au véhicule à travers sa structure supérieure de toit.

Après le passage du véhicule, la partie mobile ou déformable de l'ensemble d'alimentation, qui n'est plus contrainte vers le haut, revient dans sa position de repos dans laquelle le ou les frotteurs sont automatiquement mis hors tension.

Par axe longitudinal, on entend un axe sensiblement parallèle au sens de déplacement du véhicule, tandis que par axe transversal, on entend un axe sensiblement orthogonal au sens de déplacement du véhicule.

Grâce à l'invention, les parties externes et accessibles des moyens d'alimentation électrique ne sont sous tension que lors du passage du véhicule, ou de son arrêt sous l'ensemble d'alimentation électrique, ce qui évite tout risque d'accident par électrocution. En outre, il s'agit d'un dispositif à sécurité positive, ce qui accroît encore son caractère sécuritaire.

L'ensemble d'alimentation électrique de l'invention peut également être escamotable ou effaçable, par exemple par pivotement horizontal ou vertical, ce qui permet de libérer la chaussée ou la voie sur toute sa hauteur. Cet effacement de l'ensemble d'alimentation électrique peut être manuel ou motorisé. Il peut également être automatique en fonction de certaines circonstances, ou être commandé à distance, pour tout ou partie du réseau d'alimentation électrique de l'invention.

Cet effacement peut également être provoqué par un choc frontal ou autre, par exemple lorsque le véhicule heurte l'ensemble d'alimentation électrique de l'invention de manière violente ou anormale, ce qui évite tout risque de détérioration à la fois pour la structure de captage du véhicule et pour l'ensemble aérien d'alimentation électrique. Dans ce cas, on prévoit un dispositif adapté de sécurité par exemple un dispositif à goupille fusible ou réarmable.

D'autres caractéristiques et avantages de l'invention apparaîtront à la lecture de la description détaillée qui va suivre, effectuée sur un exemple de réalisation en référence aux dessins annexés, dans lesquels :
- la figure 1 est une vue de profil d'un bras pivotant d'alimentation électrique selon un des modes de réalisation de l'invention, ce bras étant basculé vers le haut par le passage d'un véhicule ;
- la figure 2 est une vue de profil du bras pivotant de la figure 1 en position basse de repos ;
- la figure 3 est une vue de profil du bras pivotant de la figure 1 en position basculée vers le haut ;
- la figure 4 est une vue de profil du bras pivotant de la figure 2 en position effacée par pivotement horizontal ;
- la figure 5 est une vue de dessus du bras pivotant de la figure 2 ;
- la figure 6 est une vue de dessus du bras pivotant de la figure 3 ;
- la figure 7 est une vue de dessus du bras pivotant de la figure 4 ;
- la figure 8 est une vue en coupe verticale du bras pivotant des figures 2 et 5 ;
- la figure 9 est une vue en coupe verticale du bras pivotant des figures 3 et 6 ;
- la figure 10 est une vue en perspective de dessus du bras pivotant de la figure 2 ;
- la figure 11 est une vue en perspective de dessus du bras pivotant de la figure 2 dans lequel on a enlevé des éléments tels que l'habillage et les frotteurs d'alimentation électrique ;
- les figures 12 et 13 sont des vues schématiques illustrant un moyen de double sécurité électrique avec détection de proximité de véhicule ;
- la figure 14 est une vue schématique d'un bras double pour deux voies de circulation ;
- la figure 15 est une vue en perspective d'un bras pivotant en équerre ;
- la figure 16 est une vue de profil du bras pivotant de la figure 15 ; et
- la figure 17 est une vue de face du bras pivotant de la figure 15.

La présente invention procède de l'idée générale inventive selon laquelle on alimente en énergie électrique un véhicule ou une rame de transport en commun de personnes possédant une structure de captage sur son toit, à partir d'un ensemble supérieur d'alimentation électrique monté sur une base fixe et portant une ou des pièces polaire(s) faisant office de frotteur(s) au-dessus de l'espace de passage du véhicule électrique, pièces polaires qui sont amenées ou arrivent automatiquement en contact avec la structure de toit. Cet ensemble supérieur d'alimentation passe d'une position de repos dans laquelle les frotteurs sont hors tension à une position d'alimentation dans laquelle le ou les frotteurs sont en contact dormant ou glissant avec la structure supérieure de toit du véhicule pour la fourniture d'énergie électrique en marche lors du passage du véhicule sous l'ensemble d'alimentation électrique ou à l'arrêt lorsque celui-ci se trouve immobilisé en-dessous de cet ensemble d'alimentation électrique.

Pour des raisons de sécurité, la tension électrique d'alimentation est automatiquement coupée en dehors des phases de captage.

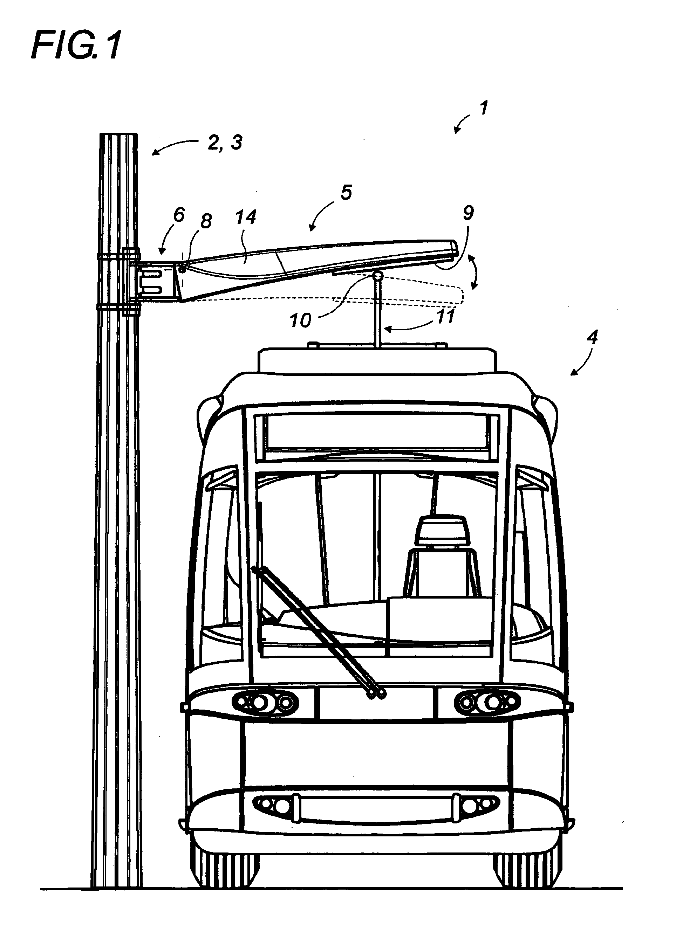

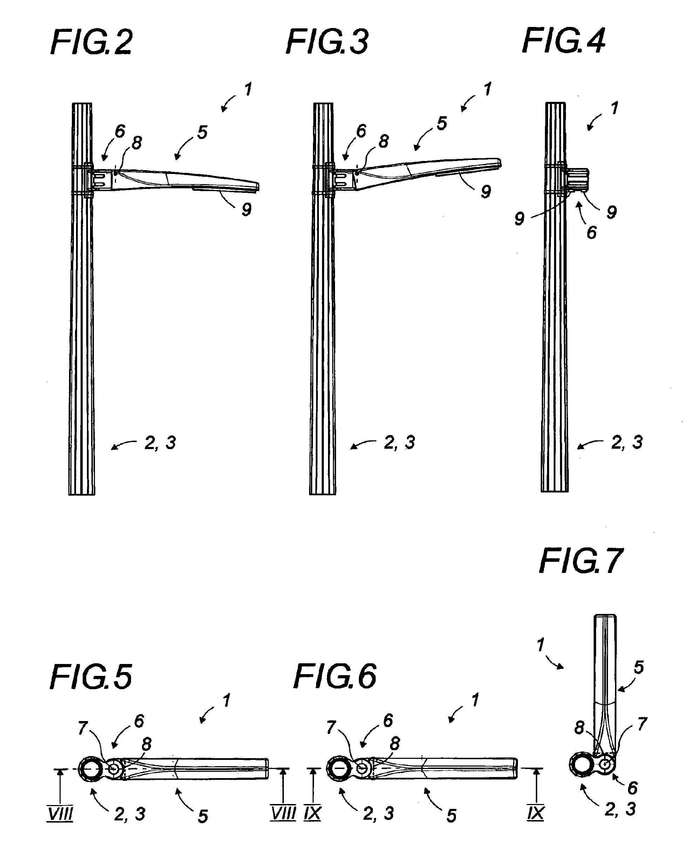

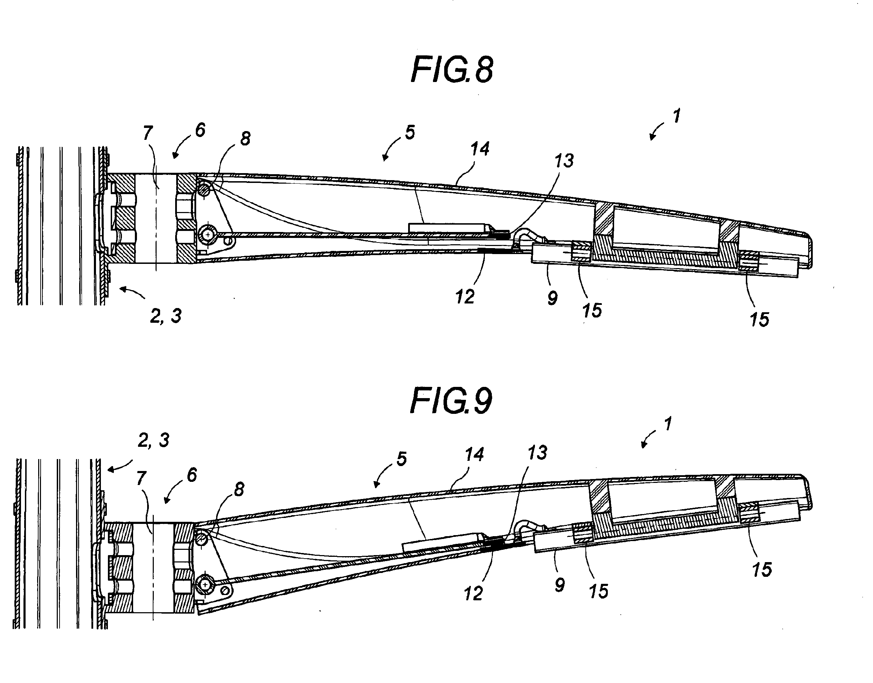

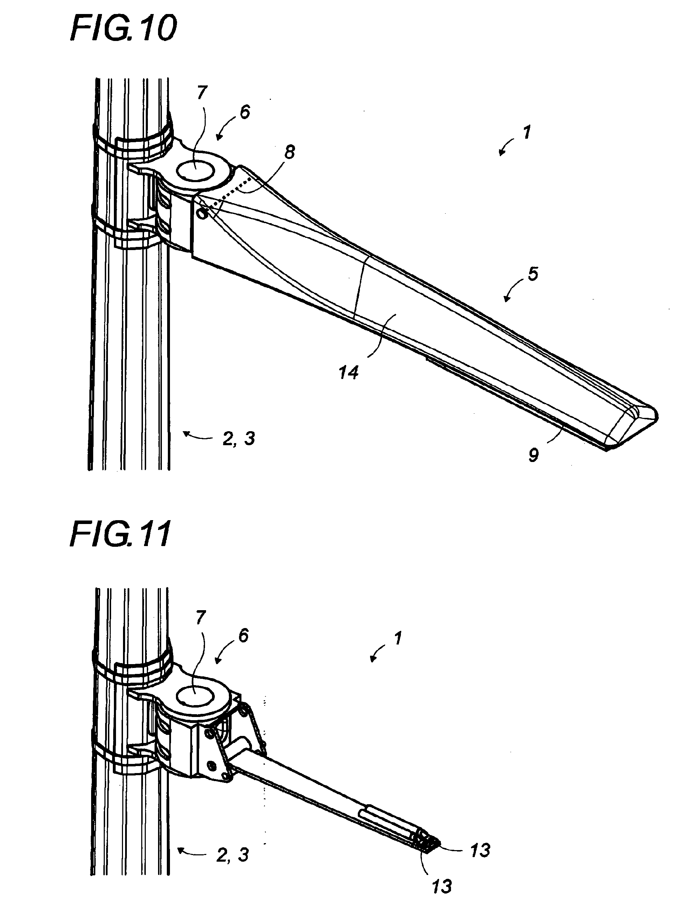

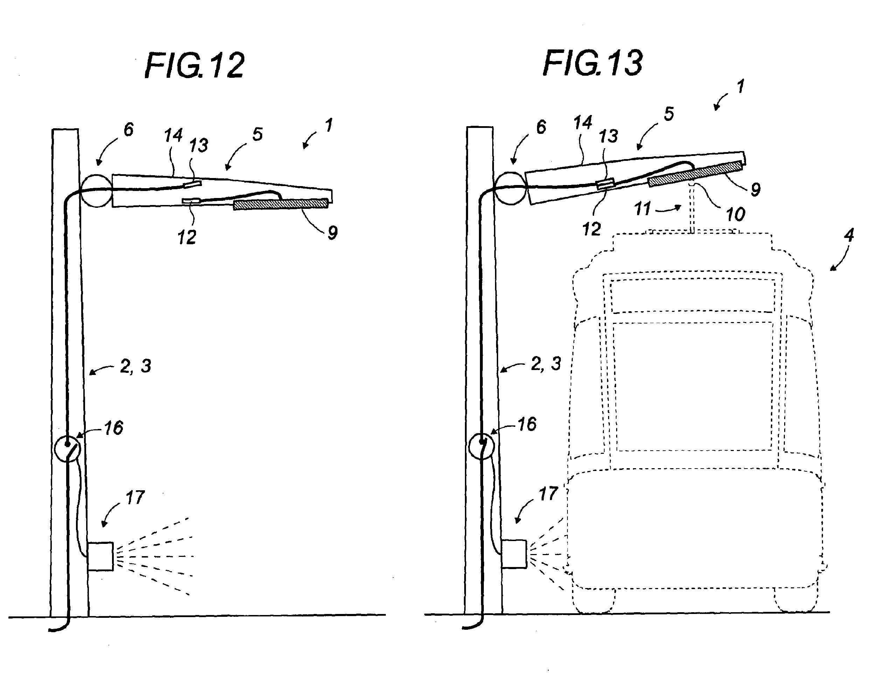

On décrira d'abord ci-après un mode de réalisation à bras pivotant d'alimentation électrique en référence aux figures 1 à 17. Les éléments équivalents représentés sur les différentes figures porteront les mêmes références numériques.

Il doit être bien compris que les détails de ce mode de réalisation ne constituent en aucune façon une limitation mais au contraire que toute variante déductible de ce mode de réalisation préférentiel entre directement dans le cadre de l'invention et donc dans son champ de protection.

Le bras pivotant d'alimentation électrique 1 est par exemple prévu pour être monté sur une base 2 verticale ou autre, de préférence fixe, par exemple sur un mat, un poteau, un lampadaire, un feu routier, une façade, un mur ou autres structures fixes. Par souci de simplification, sur les différentes figures on a représenté ce bras pivotant d'alimentation électrique 1 monté sur un poteau 3. Il ne s'agit que d'un exemple de base 2 pour le bras pivotant 1 et cela ne doit pas être interprété limitativement. De manière générale, la base 2 sur laquelle est monté le bras pivotant d'alimentation électrique 1 qui peut être quelconque et présenter des fonctions supplémentaires, l'homme du métier pouvant ainsi prévoir de monter le bras pivotant de l'invention 1 sur toute base fixe 2 appropriée à la situation et aux exigences techniques sans s'écarter de l'idée générale inventive.

Cette base 2 doit néanmoins présenter une résistance mécanique suffisante pour porter le bras pivotant d'alimentation électrique 1 de manière ferme, car la position de repos de celui-ci doit être fixe et constante quelles que soient les forces ou contraintes extérieures météorologiques ou autres. En outre, le bras pivotant 1 est susceptible d'être heurté violemment par le passage d'un véhicule ou mobile quelconque et même du véhicule 4 à alimenter, pouvant être simple ou articulé, à rames ou autre. Dans ce cas, il ne doit donc pas être arraché accidentellement par le passage de celui-ci.

De manière générale, le bras pivotant d'alimentation électrique 1 comprend une partie fixe en fonctionnement et une partie mobile 5 rigide ou déformable. La partie fixe en fonctionnement peut être importante ou se réduire à une pièce mécanique ou à un composant d'articulation monté directement sur la base 2 ou sur tout autre moyen par l'intermédiaire d'une fixation 6. Cette fixation 6 peut préférentiellement comprendre un ou plusieurs moyens d'effacement 7 permettant au bras de s'effacer hors de l'espace de passage du véhicule dans une position rabattue de sécurité.

L'ensemble d'alimentation électrique selon l'invention comprend ainsi de préférence une articulation d'effacement 7 qui permet de déplacer l'ensemble d'alimentation électrique 1 ou une partie de celui-ci dans une position d'effacement. Il s'agit préférentiellement d'une articulation de pivotement qui permet de réaliser cet effacement par un mouvement de pivotement horizontal ou vertical.

Un moteur (non représenté), par exemple commandé à distance par un dispositif de commande, peut éventuellement être prévu pour assister ce mouvement d'effacement.

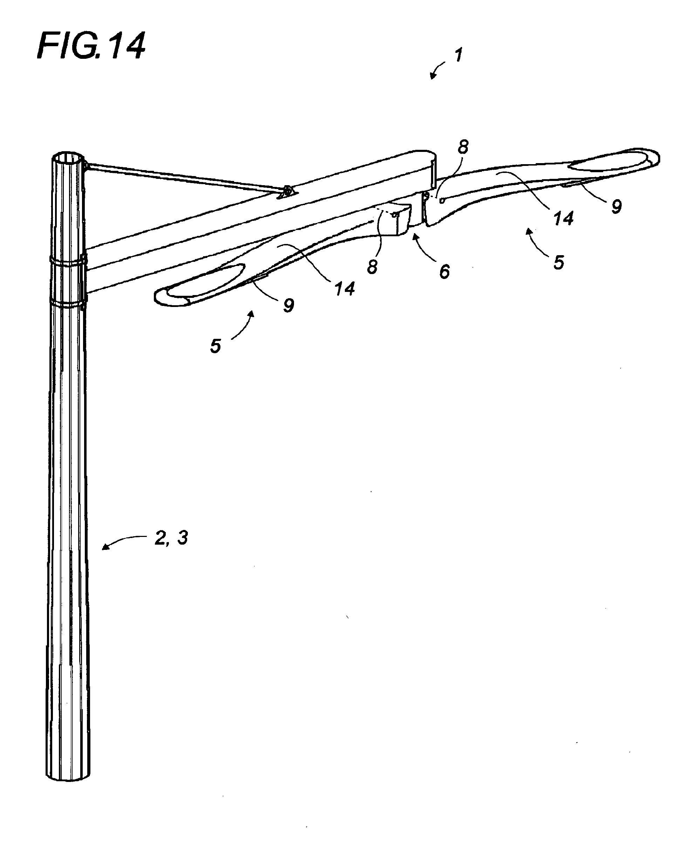

L'extrémité du bras se prolonge par une liaison par exemple une articulation principale 8 se poursuivant par la partie mobile 5 qui lui permet de se déplacer, par exemple de pivoter vers le haut. La partie fixe en fonctionnement du bras peut s'étendre pour constituer un porte-à-faux plus ou moins long pour la partie mobile 5, permettant ainsi de déporter l'articulation principale 8 vers l'extérieur par rapport au poteau 3 ou à la base 2 et de diminuer, le cas échéant, la longueur de la partie mobile 5. Selon le même ordre d'idée, on peut envisager des bras portant deux parties mobiles : l'une pour la circulation dans un sens et l'autre pour la voie parallèle dans l'autre sens (figure 14).

Selon la réalisation représentée et de façon générale, le bras ou la partie mobile se compose d'un premier segment de raccordement suivie vers l'extérieur d'une tête portant un ou des contact(s) électrique(s) sous la forme d'un ou de plusieurs frotteur(s).

La fixation 6 qui comprend les moyens d'effacement 7 permet de rabattre le bras pivotant d'alimentation électrique 1, par exemple par pivotement de rabattement par rapport à ce poteau. Ce mouvement de pivotement peut être assisté par un moteur (non représenté), le moteur pouvant être commandé à distance par un dispositif de commande. On peut également prévoir un dispositif de sécurité comme une goupille fusible bloquant normalement l'articulation d'effacement 7 suivant l'axe vertical et qui casse sous le choc afin de protéger le bras. Un dispositif réarmable est aussi possible comme un blocage par une bille forcée, par exemple par un ressort.

Le bras peut aussi être effacé manuellement pour permettre le passage d'un véhicule de grandes dimensions et notamment de hauteur exceptionnelle.

Dans sa partie mobile ou déformable 5, par exemple à son extrémité libre, le bras pivotant d'alimentation électrique 1 comprend un ou plusieurs frotteurs 9 prévus pour venir en contact par l'arrivée et l'avance du véhicule sous ou plus généralement en regard de l'ensemble d'alimentation avec un élément de captage électrique 10 d'une structure supérieure de captage 11, par exemple de toit du véhicule électrique 4, ce contact ayant lieu pendant le passage du véhicule 4 ou à l'arrêt du véhicule 4 sous le bras pivotant 1. Lors de ce passage, les frotteurs 9 sont mis sous tension d'alimentation électrique pour alimenter le véhicule 4 en énergie électrique soit directement, soit à travers ses batteries (non représentées).

Selon l'exemple représenté, les frotteurs d'alimentation 9 du bras pivotant 1 d'alimentation électrique comportent des contacts 12 qui sont et restent hors tension dans la position de repos du bras 1, mais qui sont mis sous tension au moment où la partie mobile 5 du bras pivotant 1 est déplacée vers le haut de manière forcée par l'élément de captage électrique 10 de la structure supérieure de captage 11 du véhicule 4.

Les frotteurs peuvent affecter différentes formes. Il peut s'agir d'un ou de bloc(s) rigide(s) rectilignes et à face plane de contact ou de platines ou d'une structure monobloc ou de bloc(s) flexibles ou reliés à la structure qui les porte par une suspension à effet élastique ou montés en basculement ou de toute autre forme ou nature pouvant convenir.

Le bras d'alimentation électrique 1 comporte une ou plusieurs bornes d'alimentation électrique 13 sur lesquelles aboutissent les câbles d'alimentation électrique. Les bornes d'alimentation 13 sont reliées à une alimentation électrique (non représentée), chaque borne d'alimentation électrique 13 étant prévue à distance des contacts 12 qui sont reliés chacun à un frotteur d'alimentation 9 du bras pivotant 1.

L'ensemble d'alimentation selon l'invention peut comprendre en outre un capotage de protection 14 pour protéger les bornes d'alimentation électrique 13 de l'environnement extérieur et éviter les risques d'accident par électrocution.

Lors du déplacement de la partie mobile 5 du bras d'alimentation électrique 1 vers le haut, chaque borne électrique 13 vient en contact avec le contact 12 du frotteur 9 qui lui est associé, de sorte que chaque frotteur 9 se trouve mis sous tension électrique à ce moment et pour la durée du passage du véhicule. Cette mise en contact peut s'effectuer soit par déplacement de la borne d'alimentation 13, soit par déplacement du contact 12, soit par rapprochement mutuel de ces deux éléments 12, 13, ces déplacements résultant à chaque fois du déplacement de la partie mobile 5 ou de la flexion de la partie déformable du bras d'alimentation électrique 1 du fait de la présence du véhicule 4.

Il ne s'agit que d'un exemple de réalisation dans laquelle les contacts électriques sont situés dans la partie mobile du bras. Ils peuvent bien entendu être situés ailleurs et la mise en et hors tension peut alors s'effectuer différemment. La mise en tension électrique des frotteurs 9 peut également être déclenchée à distance, par exemple au moyen d'un capteur de présence ou de proximité, à l'arrivée du véhicule à proximité de l'ensemble d'alimentation, c'est-à-dire un peu avant le contact physique entre les frotteurs 9 et la structure de captage du véhicule.

Sur l'exemple préférentiel représenté, les frotteurs 9 d'alimentation électrique sont montés sur une suspension élastique par exemple en basculement au moyen d'au moins un support pivotant 15, par exemple présentant un effet de torsion autour de l'axe de basculement pour que la prise de contact s'effectue de façon progressive, non brutale et dans la zone transversale centrale, le contact devant se réaliser toujours bien à plat.

L'articulation principale 8 du bras et la suspension des frotteurs permettent aussi aux frotteurs d'épouser correctement la piste de captage sur le véhicule dans tous ses débattements dynamiques. En effet, le véhicule est lui même équipé de suspensions et le contact électrique doit être maintenu lors des mouvements verticaux de la carrosserie. De même, la piste de captage n'est pas parfaitement rectiligne et grâce à leur suspension propre, les frotteurs peuvent épouser la piste en gardant un contact au moins linéique.

La charge nécessaire pour assurer le contact est donnée par le poids mort du bras, mais peut être compensée en plus ou en moins par un ressort situé près de l'articulation entre le bras et la partie fixe. Ces mouvements pourront être amortis par un amortisseur télescopique ou par des frottements secs au niveau de l'articulation.

On peut imaginer en restant dans la même idée inventive de réaliser la partie mobile en deux ensembles. Le premier ensemble est une tête d'alimentation portant ou renfermant les pièces polaires et le deuxième ensemble est une liaison déformable avec effet élastique par exemple souple avec rappel élastique en position basse. On peut citer à titre d'exemple, un ressort à lame ou tout moyen équivalent porté d'un côté par la partie fixe et portant de l'autre côté la tête équipée du ou des frotteur(s). La force élastique de rappel est telle qu'en position d'alimentation, les frotteurs sont maintenus en contact suffisant d'alimentation électrique avec la structure de captage du toit du véhicule.

L'arrivée de la structure de captage de toit du véhicule soulèvera la tête d'alimentation qui par la flexibilité de la liaison déformable sera contrainte en appui élastique sur la structure de captage du véhicule.

Afin d'améliorer la sécurité électrique, le bras d'alimentation électrique 1 peut comprendre en outre un moyen automatique de connexion/déconnexion 16 qui coupe l'alimentation électrique, par exemple après une durée de temporisation prédéfinie suivant le passage d'un véhicule, le moyen automatique de connexion/déconnexion 16 rétablissant l'alimentation électrique lors du passage d'un véhicule 4 ou à l'approche de celui-ci sous le bras d'alimentation électrique 1 ou à l'approche de celui-ci.

A cet effet, le moyen automatique de connexion/ déconnexion 16 est relié à un détecteur 17 de présence ou de proximité placé par exemple au niveau de la partie inférieure du poteau 3 ou autre base 2 de fixation du bras d'alimentation ou en un autre endroit approprié, ce détecteur 17 permettant de générer, lors de l'approche du véhicule 4 puis après son passage sous le bras d'alimentation électrique 1, une consigne principale ou supplémentaire de mise sous tension et de coupure de l'alimentation électrique.

Selon une autre variante, le bras d'alimentation électrique 1 de l'invention peut en outre comprendre un moyen de verrouillage/déverrouillage mécanique automatique (non représenté) qui verrouille automatiquement la partie mobile 5 du bras d'alimentation électrique 1 en position de repos, c'est-à-dire hors tension, en l'absence du véhicule ou après le passage de celui-ci et déverrouille la partie mobile 5 du bras d'alimentation électrique pour la faire passer en position de contact électrique d'alimentation par exemple lors de son mouvement de relevage.

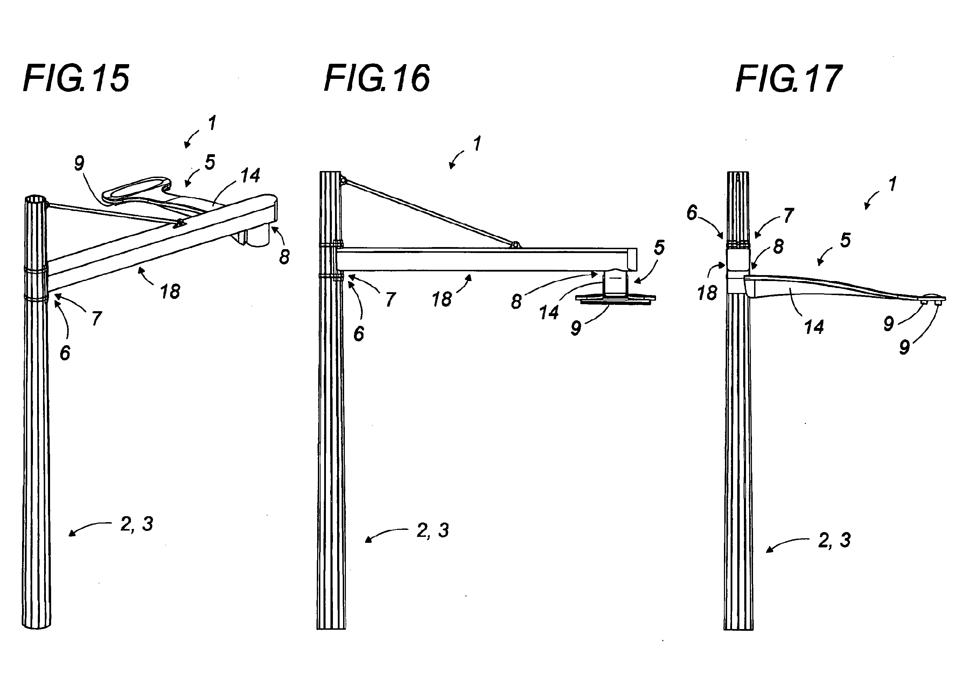

Une variante supplémentaire est représentée sur les figures 15 à 17. Selon cette variante, l'ensemble d'alimentation électrique 1 de l'invention comprend un élément porteur 18, transversal à la base fixe 2 et monté en porte-à-faux sur celle-ci par l'intermédiaire d'une fixation 6, constituant ainsi un ensemble en potence. L'élément porteur 18, préférentiellement rectiligne, porte à son extrémité libre la partie mobile ou déformable 5 de l'ensemble d'alimentation électrique 1 à angle droit par l'intermédiaire d'une articulation de pivotement 8.

Selon cette variante, en position de repos et d'utilisation de l'ensemble d'alimentation électrique 1, l'élément porteur 18 se trouve en position transversale par rapport à la voie, tandis que la partie mobile 5 de l'ensemble d'alimentation électrique 1 est parallèle à la voie. Ainsi, en position de repos et d'utilisation, les frotteurs d'alimentation 9 sont perpendiculaires à la voie et parallèles à l'élément porteur 18.

Selon cette variante, la fixation 6 peut comporter l'articulation de pivotement 7 permettant l'effacement de l'ensemble d'alimentation électrique 1 de l'invention. Cette articulation de pivotement 7 peut être prévue par exemple pour faire pivoter l'élément porteur 18 de 90° de sorte qu'il se retrouve parallèle à la voie, ou par exemple pour faire pivoter l'élément porteur 18 de 180° de sorte qu'il se retrouve perpendiculaire à la voie mais du côté opposé à celle-ci.

De manière évidente, l'invention ne se limite pas aux modes de réalisation préférentiels décrits précédemment et représentés sur les différentes figures, l'homme du métier pouvant y apporter de nombreuses modifications et imaginer d'autres variantes sans sortir ni de la portée, ni du cadre de l'invention définis par les revendications.

Par exemple, l'axe longitudinal peut devenir transversal tout en gardant les frotteurs perpendiculaires à l'axe général de la ligne de captage sur le véhicule électrique.

Par exemple, dans le cas où l'on souhaite pouvoir alimenter simultanément et à partir d'une même base fixe deux véhicules situés côte à côte sur deux voies de circulation, on peut prévoir un ensemble d'alimentation électrique selon l'invention qui comporte au moins deux frotteurs ou deux ensembles de frotteurs 9 éloignés l'un de l'autre d'une distance au moins égale à la largeur d'un véhicule, comme cela est représenté sur la figure 14.

En outre, le bras pivotant 1 peut comporter d'autres moyens, tels que par exemple des moyens d'éclairage pour la chaussée. De même, l'utilisation de la base de fixation sur laquelle le bras pivotant de l'invention est monté peut aussi avoir d'autres fonctions ou comporter d'autres dispositifs, tels que des moyens d'éclairage, des lignes électriques, des relais hertziens et autres.

On peut envisager également dans le cadre de la présente invention un mode de réalisation à support de pièces polaires toujours perpendiculaire à la direction d'avance du véhicule, mais selon lequel, ce support est mobile entre une position de repos et une position d'alimentation par basculement autour d'un axe non parallèle au véhicule mais perpendiculaire à la direction d'avance de celui-ci.

Comme précédemment, la partie mobile peut être réalisée en deux ensembles l'un sous la forme d'une tête portant la ou les pièces polaires et l'autre sous la forme d'une liaison rigide ou déformable ou déformable avec effet élastique à force de rappel vers le bas.

Dans cette réalisation, c'est préférentiellement la rampe montante de début de la structure de toit qui, par son avance, poussera en basculement la ou les pièces polaires avec leur support pour les amener dans leur position d'alimentation électrique.

## Revendications

1. Ensemble aérien d'alimentation électrique à disposer à proximité d'une voie de circulation ou d'arrêt d'un véhicule terrestre (4) destiné à fournir temporairement de l'énergie électrique à ce véhicule terrestre (4) au passage ou à l'arrêt de celui-ci, cet ensemble étant monté sur une base fixe (2), telle qu'un poteau (3), un montant, une façade ou autre, et comprenant une ou plusieurs pièces polaires de contact électrique par frottement dormant ou glissant destinées à venir en contact de fourniture d'énergie électrique avec au moins un élément de captage électrique (10) d'une structure de captage (11) portée par la partie supérieure du véhicule terrestre (4), **caractérisé en ce qu'**il comporte les moyens suivants :
• une partie fixe servant de support ;
• une partie mobile ou déformable (5), prévue pour se déplacer ou se déformer mécaniquement et automatiquement vers le haut sous l'effet d'une contrainte mécanique provenant de l'arrivée du véhicule ou de sa présence en regard de l'ensemble d'alimentation (1) ;
• un ou des frotteur(s) (9) porté(s) par la partie mobile ou déformable (5) sous la forme d'une ou de plusieurs pièces polaires s'étendant dans un plan sensiblement perpendiculaire à la voie ;
• une liaison entre la partie fixe et la partie mobile ou déformable (5) de l'ensemble (1) prévue pour le déplacement automatique des frotteurs (9) entre une position de repos en l'absence de contact entre les frotteurs (9) et la structure de captage (11) portée par le véhicule, et une position de contact électrique d'alimentation lorsque les frotteurs (9) sont en contact avec la structure de captage (11) portée par le véhicule lors de la présence du véhicule (4) en déplacement ou à l'arrêt en regard de l'ensemble d'alimentation (1) et inversement ;
• un ensemble de raccordement électrique d'alimentation automatique des frotteurs (9) qui alimente les frotteurs (9) uniquement à l'arrivée du véhicule ou en sa présence en regard de l'ensemble d'alimentation (1) ;
et **en ce que** le déplacement ou la déformation mécanique et automatique vers le haut de la partie mobile ou déformable (5) met les frotteurs (9) en tension, tandis que le retour en position de repos de la partie mobile ou déformable (5) et la mise hors tension des frotteurs (9) est automatique après le passage du véhicule.

2. Ensemble d'alimentation électrique selon la revendication 1 **caractérisé en ce que** la partie mobile ou déformable (5) bascule ou provoque un basculement autour d'un axe sensiblement parallèle ou perpendiculaire à la voie.

3. Ensemble d'alimentation électrique selon la revendication 2 **caractérisé en ce que** la partie mobile ou déformable (5) est constituée d'une tête portant le ou les frotteur(s) prolongée par une liaison rigide ou déformable jusqu'à la jonction avec la base fixe (2).

4. Ensemble d'alimentation électrique selon l'une quelconque des revendications précédentes **caractérisé en ce que** la partie mobile ou déformable (5) est du type à effet élastique à rappel vers le bas ou comprend un ressort à lame.

5. Ensemble d'alimentation électrique selon la revendication 2 **caractérisé en ce que** la liaison entre la partie mobile ou déformable (5) et la partie fixe comprend une articulation.

6. Ensemble d'alimentation électrique selon la revendication 5, **caractérisé en ce que** la liaison entre la partie mobile ou déformable (5) et la partie fixe est une articulation (8) formant un moyen de pivotement pour le déplacement de la partie mobile ou déformable (5) de l'ensemble d'alimentation électrique (1) provoquant un mouvement de basculement vertical autour d'un axe sensiblement parallèle à la voie.

7. Ensemble d'alimentation électrique selon l'une quelconque des revendications précédentes, **caractérisé en ce que** les frotteurs (9) sont flexibles ou reliés à la structure qui les porte par une suspension (15) à effet élastique ou montés en basculement.

8. Ensemble d'alimentation électrique selon la revendication 1, **caractérisé en ce que** l'ensemble de raccordement électrique d'alimentation automatique des frotteurs (9) comprend un moyen de mise sous tension et de coupure en fonction de la présence ou de l'absence du véhicule en regard de l'ensemble d'alimentation électrique ou à proximité de celui-ci.

9. Ensemble d'alimentation électrique selon la revendication 1, **caractérisé en ce qu'**il comprend en outre un moyen de connexion/déconnexion automatique (16) qui coupe l'alimentation électrique en l'absence du véhicule et la rétablit à l'approche du véhicule.

10. Ensemble d'alimentation électrique selon la revendication précédente, **caractérisé en ce que** le moyen de connexion/déconnexion automatique (16) coupe l'alimentation électrique après une durée de temporisation suivant le passage du véhicule (4) et rétablit l'alimentation électrique à l'approche du véhicule (4) ou lors du passage de celui-ci sous l'ensemble d'alimentation électrique (1).

11. Ensemble d'alimentation électrique selon la revendication précédente, **caractérisé en ce que** le moyen de connexion/déconnexion automatique (16) est relié à un détecteur de présence ou de proximité du véhicule.

12. Ensemble d'alimentation électrique selon la revendication 1, **caractérisé en ce qu'**il comprend en outre un moyen de verrouillage/déverrouillage mécanique automatique qui verrouille automatiquement la partie mobile ou déformable (5) de l'ensemble d'alimentation électrique (1) en position de repos et la déverrouille pour passer en position de contact électrique d'alimentation.

13. Ensemble d'alimentation électrique selon la revendication 1, **caractérisé en ce qu'**il comprend en outre une articulation d'effacement (7) permettant de déplacer l'ensemble d'alimentation électrique (1) ou une partie de celui-ci dans une position d'effacement.

14. Ensemble d'alimentation électrique selon la revendication précédente, **caractérisé en ce que** l'articulation d'effacement (7) est une articulation de pivotement qui permet d'effacer l'ensemble d'alimentation électrique (1) ou une partie de celui-ci par un mouvement de pivotement horizontal ou vertical.

15. Ensemble d'alimentation électrique selon la revendication 13, **caractérisé en ce qu'**il comprend un moteur qui assiste le mouvement d'effacement.

16. Ensemble d'alimentation électrique selon la revendication 1, **caractérisé en ce qu'**il comprend en outre un élément porteur (18) transversal à la base fixe (2) monté en porte-à-faux sur la base fixe (2) par l'intermédiaire d'une fixation (6), constituant un ensemble en potence.

17. Ensemble d'alimentation électrique selon les revendications 13 et 16, **caractérisé en ce que** l'effacement de l'ensemble d'alimentation électrique (1) se fait par un pivotement de 90° ou de 180° de l'élément porteur (18) autour d'une articulation de pivotement (7) située au niveau de la fixation (6).

18. Ensemble d'alimentation électrique selon la revendication 1, **caractérisé en ce qu'**il comporte au moins deux frotteurs (9) éloignés l'un de l'autre d'une distance au moins égale à la largeur d'un véhicule (4) permettant à l'ensemble d'alimentation électrique (1) d'alimenter à partir d'une même base fixe (2) deux véhicules (4) sur deux voies de circulation.

## Patentansprüche

1. Elektrische Versorgungsgmppe über die Luft, die in der Nähe eines Verkehrswegs oder einer Haltestelle eines Landfahrzeugs (4) anzuordnen ist und zur vorübergehenden Lieferung von elektrischer Energie für dieses Landfahrzeug (4) bei der Vorbeifahrt oder dem Stillstand desselben bestimmt ist, wobei diese Gruppe auf einer festen Basis (2), wie z. B. einem Pfosten (3), einem Pfeiler, einer Fassade oder Sonstiges montiert ist und ein oder mehrere polare Teile mit elektrischem Kontakt per ruhender oder gleitender Reibung umfasst, die dazu bestimmt sind, mit wenigstens einem elektrischen Element zur Erfassung von Elektrizität (10) einer Erfassungsstmktur (11), die von dem oberen Teil des Landfahrzeugs (4) getragen wird, in Lieferkontakt elektrischer Energie zu kommen, **dadurch gekennzeichnet, dass** es die folgenden Mittel umfasst:
• einen als Träger dienenden festen Teil;
• einen mobilen oder verformbaren Teil (5), der vorgesehen ist, um sich unter der Wirkung einer mechanischen Spannung, die aus der Ankunft des Fahrzeugs oder seiner Präsenz gegenüber der Versorgungsgmppe (1) stammt, mechanisch und automatisch nach oben zu verschieben oder zu verformen;
• ein oder mehrere Schleifstück(e) (9), das / die von dem mobilen oder verformbaren Teil (5) in Form eines oder mehrerer polarer Teile getragen ist / sind, das / die sich in einer zum Weg deutlich lotrechten Ebene erstreckt / erstrecken;
• eine Verbindung zwischen dem festen Teil und dem mobilen oder verformbaren Teil (5) der Gruppe (1) und die für die automatische Verschiebung der Schleifstücke (9) zwischen einer Ruheposition bei fehlendem Kontakt zwischen den Schleifstücken (9) und der Erfassungsstmktur (11), die von dem Fahrzeug getragen wird, und einer Kontaktposition der elektrischen Versorgung vorgesehen ist, wenn die Schleifstücke (9) mit der Erfassungsstriiktur (11) in Kontakt sind, die bei der Präsenz des Fahrzeugs (4) in der Verschiebung oder beim Stillstand gegenüber der Versorgungsgmppe (1) oder umgekehrt vom Fahrzeug getragen wird;
• eine elektrische Anschlussgruppe zur automatischen Versorgung der Schleifstücke (9), die die Schleifstücke (9) nur beim Eintreffen des Fahrzeugs oder bei seiner Präsenz gegenüber der Versorgungsgruppe (1) versorgt;
und dass die mechanische und automatische Verschiebung oder Verformung nach oben des mobilen oder verformbaren Teils (5) die Schleifstücke (9) unter Spannung setzt, während die Rückkehr in die Ruheposition des mobilen oder verformbaren Teils (5) und das Freischalten der Schleifstücke (9) nach der Vorbeifahrt des Fahrzeugs automatisch erfolgt.

2. Elektrische Versorgungsgruppe gemäß Anspruch 1, **dadurch gekennzeichnet, dass** der mobile oder verformbare Teil (5) um eine zum Weg deutlich parallele oder lotrechte Achse kippt oder ein Kippen verursacht.

3. Elektrische Versorgungsgruppe gemäß Anspruch 2, **dadurch gekennzeichnet, dass** der mobile oder verformbare Teil (5) aus einem das oder die Schleifstück(e) tragenden Kopf gebildet ist, der durch eine steife oder verformbare Verbindung bis zur Nahtstelle mit der festen Basis (2) verlängert ist.

4. Elektrische Versorgungsgruppe gemäß einem der voranstehenden Ansprüche, **dadurch gekennzeichnet, dass** der mobile oder verformbare Teil (5) vom Typ mit elastischer Rückholwirkung nach unten ist oder eine Blattfeder umfasst.

5. Elektrische Versorgungsgruppe gemäß dem voranstehenden Anspruch 2 **dadurch gekennzeichnet, dass** die Verbindung zwischen dem mobilen oder verformbaren Teil (5) und dem festen Teil ein Gelenk umfasst.

6. Elektrische Versorgungsgruppe gemäß Anspruch 5, **dadurch gekennzeichnet, dass** die Verbindung zwischen dem mobilen oder verformbaren Teil (5) und dem festen Teil ein Gelenk (8) ist, das ein Schwenkmittel für die Verschiebung des mobilen oder verformbaren Teils (5) der elektrischen Versorgungsgruppe (1) bildet, das eine vertikale Kippbewegung rund um eine zum Weg deutlich parallele Achse hervorruft.

7. Elektrische Versorgungsgruppe gemäß einem der voranstehenden Ansprüche, **dadurch gekennzeichnet, dass** die Schleifstücke (9) flexibel oder an die Struktur angeschlossen sind, die sie durch eine Aufhängung (15) mit elastischer Wirkung trägt, oder kippend montiert sind.

8. Elektrische Versorgungsgruppe gemäß Anspruch 1, **dadurch gekennzeichnet, dass** die elektrische Anschlussgruppe zur automatischen Versorgung der Schleifstücke (9) ein Mittel zum Unter-Spannung-Setzen und Abschalten in Abhängigkeit von der Präsenz oder dem Fehlen des Fahrzeugs gegenüber der elektrischen Versorgungsgruppe oder in der Nähe derselben umfasst.

9. Elektrische Versorgungsgruppe gemäß Anspruch 1, **dadurch gekennzeichnet, dass** sie darüber hinaus ein automatisches Verbindungs- / Abschaltmittel (16) umfasst, das die elektrische Versorgung bei Fehlen des Fahrzeugs abschaltet und sie bei Annäherung des Fahrzeugs wieder einschaltet.

10. Elektrische Versorgungsgruppe gemäß dem voranstehenden Anspruch, **dadurch gekennzeichnet, dass** das automatische Verbindungs- / Abschaltmittel (16) die elektrische Versorgung nach einer Verzögerungsdauer im Anschluss an die Vorbeifahrt des Fahrzeugs (4) abschaltet und die elektrische Versorgung bei der Annäherung des Fahrzeugs (4) oder bei der Durchführt desselben unter der elektrischen Versorgungsgruppe (1) wieder herstellt.

11. Elektrische Versorgungsgruppe gemäß dem voranstehenden Anspruch, **dadurch gekennzeichnet, dass** das automatische Verbindungs- / Abschaltmittel (16) an einen Anwesenheitsdetektor oder Näherungssensor des Fahrzeugs angeschlossen ist.

12. Elektrische Versorgungsgruppe gemäß Anspruch 1, **dadurch gekennzeichnet, dass** sie darüber hinaus ein mechanisches automatisches Verriegelungs- / Entriegelungsmittel umfasst, das den mobilen oder verformbaren Teil (5) der elektrischen Versorgungsgruppe (1) in der Ruheposition verriegelt und sie entriegelt, um in die Kontaktposition der elektrischen Versorgung überzugehen.

13. Elektrische Versorgungsgruppe gemäß Anspruch 1, **dadurch gekennzeichnet, dass** sie darüber hinaus ein Löschungsgelenk (7) umfasst, das die Verschiebung der elektrischen Versorgungsgruppe (1) oder einen Teil derselben in eine Löschungsposition erlaubt.

14. Elektrische Versorgungsgruppe gemäß dem voranstehenden Anspruch, **dadurch gekennzeichnet, dass** das Löschungsgelenk (7) ein Schwenkgelenk ist, das die Unterdrückung der elektrischen Versorgungsgnippe (1) oder eines Teils derselben durch eine horizontale oder vertikale Schwenkbewegung erlaubt.

15. Elektrische Versorgungsgruppe gemäß Anspruch 13, **dadurch gekennzeichnet, dass** es einen Motor umfasst, der die Löschungsbewegung unterstützt.

16. Elektrische Versorgungsgruppe gemäß Anspruch 1, **dadurch gekennzeichnet, dass** sie darüber hinaus ein transversales Trägerelement (18) an der festen Basis (2) umfasst, das mittels einer Befestigung (6), die eine Auslegergruppe bildet, auskragend auf der festen Basis (2) montiert ist.

17. Elektrische Versorglingsgruppe gemäß Anspruch 13 und 16, **dadurch gekennzeichnet, dass** die Löschung der elektrischen Versorgungsgruppe (1) durch ein Schwenken um 90° oder um 180° des Trägerelements (18) um ein Schwenkgelenk (7), das sich auf der Höhe der Befestigung (6) befindet, erfolgt.

18. Elektrische Versorgungsgruppe gemäß Anspruch 1, **dadurch gekennzeichnet, dass** sie wenigstens zwei Schleifstücke (9) umfasst, die voneinander um eine Entfernung von wenigstens gleich der Breite eines Fahrzeugs (4) entfernt sind, die es der elektrischen Versorgungsgruppe (1) ermöglicht, zwei Fahrzeuge (4) auf zwei Verkehrswegen ausgehend von einer und derselben festen Basis (2) zu versorgen.

## Claims

1. An aerial electricity-supplying assembly, to be disposed close to a road where a ground vehicle (4) circulates or is stationary, intended to supply electrical power temporarily to this ground vehicle (4) while it is passing by or stationary, this assembly being mounted on a fixed base (2), such as a pole (3), a column, a façade or other structure, and comprising one or more polar pieces for electrical contact by dormant or sliding friction, intended to come into contact for delivery of electrical power with at least one electricity-collecting element (10) of a collecting structure (11) carried by the upper part of the ground vehicle (4), **characterized in that** it is provided with the following means:
• a fixed part functioning as support;
• a movable or deformable part (5) intended to be mechanically and automatically moved or deformed upward under the effect of a mechanical constraint caused by the arrival of the vehicle or by its presence facing the supply assembly (1);
• one or more friction members (9) carried by the movable or deformable part (5) in the form of one or more polar pieces extending in a plane substantially perpendicular to the road;
• a link between the fixed part and the movable or deformable part (5) of the assembly (1), intended for automatic displacement of the friction members (9) between a rest position in the absence of contact between the friction members (9) and the collecting structure (11) carried by the vehicle, and an electricity-supplying contact position when the friction members (9) are in contact with the collecting structure (11) carried by the vehicle during the presence of the moving or stationary vehicle (4) facing the supply assembly (1) and vice versa;
• an electrical termination assembly for automatically supplying the friction members (9) which supplies the friction members (9) only upon arrival of the vehicle or during its presence facing the supply assembly (1);
and **in that** the upward mechanical and automatic moving or deformation of the movable or deformable part (5) powers the friction members (9), whereas the return of the movable or deformable part (5) in its rest position and the friction members (9) power cutting are automatic after passage of the vehicle.

2. An electricity-supplying assembly according to claim 1 **characterized in that** the movable or deformable part (5) tilts or causes tilting around an axis substantially parallel or perpendicular to the road.

3. An electricity-supplying assembly according to claim 2 **characterized in that** the movable or deformable part (5) is constituted by a head carrying the friction member or members and prolonged by a rigid or deformable link up to the junction with the fixed base (2).

4. An electricity-supplying assembly according to any one of the preceding claims **characterized in that** the movable or deformable part (5) is of the elastic effect type with downward return or comprises a leaf spring.

5. An electricity-supplying assembly according to claim 2 **characterized in that** the link between the movable or deformable part (5) and the fixed part comprises a hinge.

6. An electricity-supplying assembly according to claim 5, **characterized in that** the link between the movable or deformable part (5) and the fixed part is a hinge (8), forming a pivoting means for displacement of the movable or deformable part (5) of the electricity-supplying assembly (1), causing a vertical tilting movement around an axis substantially parallel to the road

7. An electricity-supplying assembly according to any one of the preceding claims, **characterized in that** the friction members (9) are flexible or connected to the structure carrying them by an elastic effect suspension (15) or are mounted tiltingly.

8. An electricity-supplying assembly according to claim 1, **characterized in that** the electrical termination assembly for automatically supplying the friction members (9) comprises a means for powering and for cutting the power according to the presence or absence of the vehicle facing or close to the electricity-supplying assembly.

9. An electricity-supplying assembly according to claim 1, **characterized in that** it additionally comprises an automatic connection/disconnection means (16), which cuts the electrical supply in the absence of the vehicle and re-establishes it upon approach of the vehicle.

10. An electricity-supplying assembly according to the preceding claim, **characterized in that** the automatic connection/disconnection means (16) cuts the electrical supply after a delay time following passage of the vehicle (4) and re-establishes the electrical supply upon approach of the vehicle (4) or during passage thereof underneath the electricity-supplying assembly (1).

11. An electricity-supplying assembly according to the preceding claim, **characterized in that** the automatic connection/disconnection means (16) is connected to a detector of the presence or proximity of the vehicle.

12. An electricity-supplying assembly according to claim 1, **characterized in that** it additionally comprises an automatic mechanical locking/unlocking means, which automatically locks the movable or deformable part (5) of the electricity-supplying assembly (1) in rest position and unlocks it to move into electricity-supplying contact position.

13. An electricity-supplying assembly according to claim 1, **characterized in that** it additionally comprises a deflection hinge (7) making it possible to displace the electricity-supplying assembly (1) or part thereof into a deflected position.

14. An electricity-supplying assembly according to the preceding claim, **characterized in that** the deflection hinge (7) is a pivoting hinge that makes it possible to deflect the electricity-supplying assembly (1) or part thereof by a horizontal or vertical pivoting movement.

15. An electricity-supplying assembly according to claim 13, **characterized in that** it comprises a motor that assists the deflection movement.

16. An electricity-supplying assembly according to claim 1, **characterized in that** it additionally comprises a carrying element (18), transversal relative to the fixed base (2) and mounted as a cantilever on the fixed base (2) by way of a fastening (6), constituting a bracket assembly.

17. An electricity-supplying assembly according to claims 13 and 16, **characterized in that** the deflection of the electricity-supplying assembly (1) is achieved by pivoting the carrying element (18) by 90° or 180° around a pivoting hinge (7) situated at the fastening (6).

18. An electricity-supplying assembly according to claim 1, **characterized in that** it is provided with at least two friction members (9) spaced apart from one another by a distance at least equal to the width of one vehicle (4), permitting the electricity-supplying assembly (1) to supply two vehicles (4) on two circulation roads from the same fixed base (2).
